# EUROPEAN PATENT SPECIFICATION

(11) **EP 4 049 984 B1**
(45) Date of publication and mention of the grant of the patent: **28.10.2026**
(21) Application number: 21158885.0
(22) Date of filing: 24.02.2021
(51) Int. Cl.: C04B 7/24, B09B 3/00, C04B 7/28, C04B 18/10, C04B 28/02, C04B 28/04, C04B 28/10, E01C 7/10

(54) **HYDRAULIC BINDER FOR ROADS WITH MSWI BOTTOM ASH AND PRODUCTION METHOD THEREOF**
HYDRAULISCHES BINDEMITTEL FÜR STRASSEN MIT MSWI-BODENASCHE UND HERSTELLUNGSVERFAHREN DAFÜR
LIANT HYDRAULIQUE POUR ROUTES AVEC CENDRES RÉSIDUELLES MSWI ET SON PROCÉDÉ DE PRODUCTION

(43) Date of publication of application: 31.08.2022
(73) Proprietor: Vilniaus Gedimino technikos universitetas, 10223 Vilnius (LT)
(72) Inventor: Malaiskiene, Jurgita, LT-08444 Vilnius (LT); Zvironaite, Jadvyga, LT-06305 Vilnius (LT); Antonovic, Valentin, LT-10103 Vilnius (LT); Stonys, Rimvydas, LT-14304 Vilnius (LT)
(74) Representative: Klimaitiene, Otilija

(56) References cited:
- EP-A1- 1 382 584
- PECQUEUR G ET AL: "Behaviour of cement-treated MSWI bottom ash", WASTE MANAGEMENT, ELSEVIER, NEW YORK, NY, US, vol. 21, no. 3, 1 June 2001 (2001-06-01), pages 229 - 233, XP004226306, ISSN: 0956-053X, DOI: 10.1016/S0956-053X(00)00094-5
- GIAMPAOLO C ET AL: "Acid neutralisation capacity and hydration behaviour of incineration bottom ash-Portland cement mixtures", CEMENT AND CONCRETE RESEARCH., vol. 32, no. 5, 1 May 2002 (2002-05-01), US, pages 769 - 775, XP055822909, ISSN: 0008-8846, DOI: 10.1016/S0008-8846(01)00760-8
- MARY JOSEPH ANEETA ET AL: "Pre-treatment and utilisation of municipal solid waste incineration bottom ashes towards a circular economy", CONSTRUCTION AND BUILDING MATERIALS, ELSEVIER, NETHERLANDS, vol. 260, 28 August 2020 (2020-08-28), XP086267239, ISSN: 0950-0618, [retrieved on 20200828], DOI: 10.1016/J.CONBUILDMAT.2020.120485

## Description

### TECHNICAL FIELD

This invention relates to binder materials, used in road construction and for reinforcing the subgrade. More specifically, it discloses a composition for a hydraulic road binder, the composition comprising a high proportion of municipal solid waste incineration bottom ash (MSWI BA), and production method of this road binder composition.

### BACKGROUND ART

Various types of cement, fly ash, or blast furnace slag are commonly used to produce hydraulic road binders. For example, WO2017085565A2 discloses a binder comprising ~80% blast furnace slag, which is a non-metallic by-product of iron production, generally consisting of silicon, calcium, aluminum, magnesium, and oxygen and with the addition of lime powder (CaO), sodium hexa-metaphosphate, nano-calcium-carbonate. It has been estimated this material to have a compressive strength of ~35 MPa, after hardening for 28 days. Another patent application PL422054A1 comprises up to 55% Portland cement, up to 64% coal fly ash, and 4-7% of micro SiO₂, to create a hydraulic binder. European patent application EP2822918A1 discloses the composition of a hydraulic binder consisting of such basic materials as clinker (60-70%) and fly ash (30-60%) and other additives, where the compressive strength of this binder after 28 days of hardening is ~30 MPa. The compressive strength of such binders is quite high, and the production is more complicated and expensive.

In 2012, the amount of MSWI BA was produced around 1.3 trillion tons worldwide, and it is forecasted, further, this amount to increase up to 2.2 trillion tons by the year 2025, because more and more municipal waste incineration plants are currently being built **[1]** (Hoornweg and Bhada-Tata, 2012). The composition of waste varies from country to country and customs, but usually, it consists of food, plastic, paper, metal, glass, textiles, ceramics **[2]** (Liu et al. 2006) and **[3]** (Wu et al 2016). These materials are heat treated at 850-1100°C temperature and generate about 25% of overall MSWI BA, based on the mass of incinerated waste **[4]** (Brunner and Rechberger 2015). The composition and properties of obtained MSWI BA depend on the composition of the incinerated waste, the type of furnace used, the incineration intensity, and other factors [5](Collivignarelli et al 2017).

Scientific articles have already disclosed information that municipal solid waste incineration bottom ash (MSWI BA) can be used as a binder for a subgrade in road structures. It is disclosed by **[6]** (Cheng et al. 2018) that a mixture of 15-20% MSWI BA and a stabilizing additive lime 1-9% (the remaining amount of the mixture is soil) can be used to strengthen the soil. The best results of these authors were obtained by adding 3% slaked lime and 15% MSWI BA to the soil. Other authors **[7]** (Bozbey et al. 2018) found that the soil can be stabilized by adding 6% slaked lime. Researchers (Sharma et al. 2018) **[8]** have disclosed that cement or lime can be used to stabilize the soil, and the optimal amount of each component is 5%. Which material - cement or lime - is more suitable for stabilizing the soil, depends on the properties of the soil itself **[9]** (Abdel-Salam A.F. 2018). Also, quicklime can be used for soil stabilization, where the quicklime is used in combination with CEM I 42.5 R type cement (4.0%) and is applied only by amount 1.5% by weight to the soil. First, the lime is mixed with the soil so that the calcium ions bind to the clay minerals and the pozzolanic reaction cannot continue. Cement and lime are the materials requiring much energy for their production, therefore, it is important to use as much of the MSWI BA as possible, to increase ecological balance but without compromising constructional characteristics of the hydraulic binder for roads, within adopted standards.

Researchers (Li et al., 2010, 2012) **[10], [11]** disclosed that after substituting up to 50% of the cement with the MSWI BA, the leaching concentrations of Ba, Cd, Cr, Cu, Ni, Pb, and Zn elements remain within acceptable limits. MSWI BA is an alkaline substance, the alkalinity of which decreases in the natural environment, during carbonization reactions. Studies show that both acidic and alkaline environments leach significantly more heavy metals than environments with neutral pH, therefore, it is recommended to maintain aging of MSWI BA for 3 months in the natural environment. The MSWI BA is usually processed and used as a filler in the production of asphalt, cement concrete or mortar. There are patents and patent applications (WO2008049642A2, US20170370050A1, EP2813479B1, EP0582008A1, EP1841712A1, LT6707B) which describe different methods for producing fillers (granules) made from MSWI BA, by burning, washing, separating metals, fractionating, adding various chemical additives, forming granules and the like.

An analysis of the literature has shown that the ash from municipal waste incineration must be aged under natural conditions for at least 3 months. Then they can be used in cementitious materials and provide bonding of heavy metals.

The first patent application closest to the present invention is CZ32553(U1), which discloses a composition of a normally hardening hydraulic binder for roads that meets the requirements of the standard EN 13282-2 class N2. This binder comprises 55-60% siliceous fly ash, 30-35% of clinker, and 10% of cement production dust. The fineness of such binder according to residue on 90 µm sieve is 14.8%, the compressive strength after hardening for 56 days is 14.5 MPa, the expansion is 1 mm.

Another close prior art document is PCT application WO2013131814A1 by Lafarge, which discloses using 40-70% Portland clinker and 30-60% fly ash from different industries and other additives, to compose the binder. The compressive strength of such binder after hardening for 28 days is ~2-12 MPa.

The paper Pecqueur et al: Behaviour of cement-treated MSWI bottom ash, February 2001, Waste Management 21(3):229-233, DOI:10.1016/S0956-053X(00)00094-5*,* discloses that use of bottom ash (being the residue of combustion) in road construction is wide spread. In such application, bottom ash is often treated with binder to improve its mechanical features. Nevertheless, bottom ash is subject to chemical problems. These problems induce an expansion which brings about cracking and finally road destruction. Therefore, it is necessary to estimate the swelling potential of MSWI bottom ash prior utilisation. This study involved work on cement-treated MSWI bottom ash. It examined different tests that show the importance of oxidation of aluminium in the swelling reaction and the efficiency of different treatments. Different binders were used in order to have different proportions of clinker. The kinetic aspects of aluminum-binder reaction were also studied. Finally, the authors present a special cell to measure the swelling pressure of these materials is presented.

The European patent application EP1382584A1 discloses a process for the production of a slurry of bottom ashes from incineration of Municipal Solid Wastes (MSW) and the use thereof in the manufacture of cement mixes with improved properties.

One more paper Mary Joseph Aneeta et al: Pre-treatment and utilisation of municipal solid waste incineration bottom ashes towards a circular economy, Construction & building materials, 20200828 Elsevier Ltd, AMSTERDAM, NL - ISSN 0950-0618, doi: http://dx.doi.org/10.1016/j.conbuildmat.2020.120485 discusses that two billion tonnes of municipal solid wastes are generated globally, and incineration of non-recyclable wastes is done extensively in developed countries. A large part of the resulting ashes remains unutilized due to various obstacles and ends up in landfills. Use in concrete as aggregate or supplementary cementitious material is a potential high value application, which is deterred mainly by presence of metallic aluminium that causes cracks from aluminium hydroxide formation and high porosity from hydrogen release on reaction with water. Various researchers have used treatment with alkalis prior to utilization as a mitigation strategy. This paper studied an alternative technique, pre-treatment by immersing ash in water allowing the aluminium to react in presence of inherent alkalis in the ash and accelerating the reaction by increasing temperature. The effect of this treatment on mitigating expansion and hydration and strength development of mortar with 25% replacement of cement by ash has been studied and is reported in this article. The treatment was found to be effective and the strength of mortar with 25% pre-treated ash replacement exceeded 85% of that of the control mortar at 90 days of age. A possible beneficiation scheme for the industrial treatment of ashes to maximise the resource utilisation is also proposed.

The technical problem and the purpose raised by the present invention is to use as much MSWI BA as possible for the road binder composition, at the same without compromising constructional characteristics of the hydraulic binder for roads.

### SUMMARY OF THE INVENTION

The purpose and technical solution to the problem are to create a road binder composition and its production method, using as much of the MSWI BA as possible for the road binder, and without compromising constructional characteristics of the hydraulic binder for roads.

The hydraulic road binder developed in the present invention uses 55-60% of MSWI BA aged 6 months. The physical and mechanical properties of this binder meet the requirements of EN 13282-1 for strength class E2 or EN 13282-2 strength class N2 or N3.

The invention is as defined by claims. The composition of a hydraulic road binder is defined by claims 1 to 2. The method of producing the composition of a hydraulic road binder is defined by claims 3 to 4.

According to the estimated properties, the compressive strength of the present hydraulic road binder is:
- after ~56 days of hardening, it is ~70%-higher, and after 28 days of hardening it is ~30%-higher than that disclosed in the closest prior art application CZ32553(U1) after 56 days; thereby, the observed expansion is similar, and the present binder is ~70%-finer;
- by comparing results to the second closest prior art document WO2013131814A1, the compressive strength of the present binder is ~50%-higher after 28 days of hardening.

### DESCRIPTION OF DRAWINGS

To understand the specific characteristics of the composition and production method, the following pictures and graphs are provided and referenced hereafter. Figures are given as examples and should not limit the scope of the invention.
- **Figure 1**: MSWI BA particle size distribution (MSWI BA is the abbreviation for Municipal Solid Waste Incineration Bottom Ash);
- **Figure 2**: Calorimetric curves (graphs).

### DETAILED DESCRIPTION OF THE INVENTION

The properties of the present hydraulic binder compositions were disclosed by testing several samples, produced from different mixture compositions. There were 5 different samples **Mix1** to **Mix5** produced by the production method, where their compositions and proportions are provided in Table 1. Mix 1 is according to the invention, mixes 2-5 are reference examples.

**Table 1. Mixture compositions (for 40×40×40mm size test samples).**

| **Sample** | **Cement CEM I 42.5 R, %** | **Cement, CEM II A/LL 42.5 N, %** | **Quicklime CL90, %** | **MSWI BA, %** | **Na₂CO₃, by weight of water, %** | **W/B** |
|---|---|---|---|---|---|---|
| **Mix1** | - | 35 | 5 | 60 | - | 0.4 |
| **Mix2** | - | 40 | 0 | 60 | - | 0.38 |
| **Mix3** | - | 30 | 10 | 60 | - | 0.45 |
| **Mix4** | - | 40 | 0 | 60 | 3 | 0.36 |
| **Mix5** | 35 | - | - | 65 | - | 0.35 |

The parameter W/B was determined from the propagation using a Sutard viscometer so that the flow diameter was ~12cm. MSWI BA is maintained (aged) for at least 6 months, under natural outdoor conditions, and cleaned of metal inclusions. The imported bottom ash is dried at 105±3°C to constant (stabilized) weight. Then, the 4/16 MSWI BA fraction is separated by sieving. This fraction was chosen because the pozzolanic activity of this ground fraction, determined according to NF P18-513, is the highest, and it is not less than 600 mg/g. The separated 4/16 fraction is ground in a ball-mill to the required fineness (residue on a 90µm sieve remains <15%). The particle size distribution of MSWI BA was also determined with a "Cilas 1090 LD" laser meter. The binder was prepared by mixing all the dry materials according to the compositions given in Table 1 in an Eirich type mixer for 4 min. Larger amounts can be mixed in a forced mixer for 10 min.

The mixtures for testing and sample formation are mixed in a Hobart type mixer according to the EN 196-1 standard. First, 40×40×40mm binder paste samples are formed. After selecting the best composition, samples are formed according to the requirements of EN 196-1 standard, where CEN standard sand was used. The swelling of the binder paste samples was fixed in the first 2 hours after dry materials contacted with water; when it was used CEN standard sand, no swelling of the samples was occurred.

Samples in molds have to be conditioned for 2 days in a humidified (≥95%) environment, then formed and kept in water at 20°C until the end of the test. The samples are measured, weighed, and the density, ultrasonic pulse velocity (UPV), and their compressive strength are determined at the time moments after 7, 28, and 56 days. The samples are measured to the nearest 0.01 mm and weighed to the nearest 0.1 g.

Ultrasonic pulse velocity (UPV) was measured by direct transmission method using a "Pundit 7" (Schleibinger Geräte GmbH, Germany) device equipped with two 54 kHz transducers (transmitter and receiver) firmly coupled to the farthest opposite ends of the paste prims using petroleum jelly as the couplant between the transducers and the samples. The UPV was calculated using equation (1) (UPV, m/s): $UPV = I / τ \left(m/s\right)$ (1) where: I is ultrasonic pulse path length through the sample i.e., the distance between the two transducers, m; τ is signal propagation time provided by the test equipment, s.

The compressive strength was determined in accordance with standard EN 196-1. The hydraulic press "ALPHA3-3000S" (FORM+TEST Seidner & Co. GmbH, Germany) was used.

Calorimetry studies of hydration kinetics of cement pastes with MSWI BA were performed using a differential conductive microcalorimeter "ToniCAL III" (Toni Technik GmbH, Germany). Test parameters: Measurements were made at 20±1°C for 48 hours. Calorimetric studies were performed with 100g of material and the W/B of all batches was the same - 0.35. A Mettler-Toledo MPC 227 instrument with an InLab 410 pH electrode measurement accuracy of 0.01 was used to determine the pH. Measurements were made at a temperature of 20±1°C. MSWI BA to water ratio 1: 4.

The chemical composition of MSWI BA was determined with a wavelength dispersion-based X-ray fluorescence analyzer (XRF) Rigaku ZSX Primus IV. Generator voltage - 60 kV, current 50mA. X-ray tube anode material Rh, X-ray tube power 4 kW. Samples were prepared for this test by forming 37 mm diameter tablets by compressing them with a hydraulic Herzog TP20 ,200kN, press (HERZOG Maschinenfabrik GmbH & Co, Germany). The average chemical composition of MSWI BA is presented in **Table** 2 (tested after 6 and 18 months maintenance in natural conditions, collected from different places).

**Table 2. Chemical composition of MSWI BA, %**

| **Oxide** | **MSWI BA, %** | **Standard deviation of 8 samples,%** |
|---|---|---|
| SiO₂ | 48,0 | 1,22 |
| CaO | 13,8 | 0,79 |
| Al₂O₃ | 5,2 | 0,91 |
| Fe₂O₃ | 4,2 | 1,51 |
| Na₂O | 3,5 | 0,22 |
| MgO | 1,4 | 0,29 |
| K₂O | 1,1 | 0,14 |
| SO₃ | 0,7 | 0,27 |
| TiO₂ | 0,6 | 0,11 |
| P₂O₅ | 0,5 | 0,12 |
| ZnO | 0,2 | 0,70 |
| CuO | 0,1 | 0,50 |
| Cl | 0,1 | 0,05 |
| BaO | 0,1 | 0,06 |

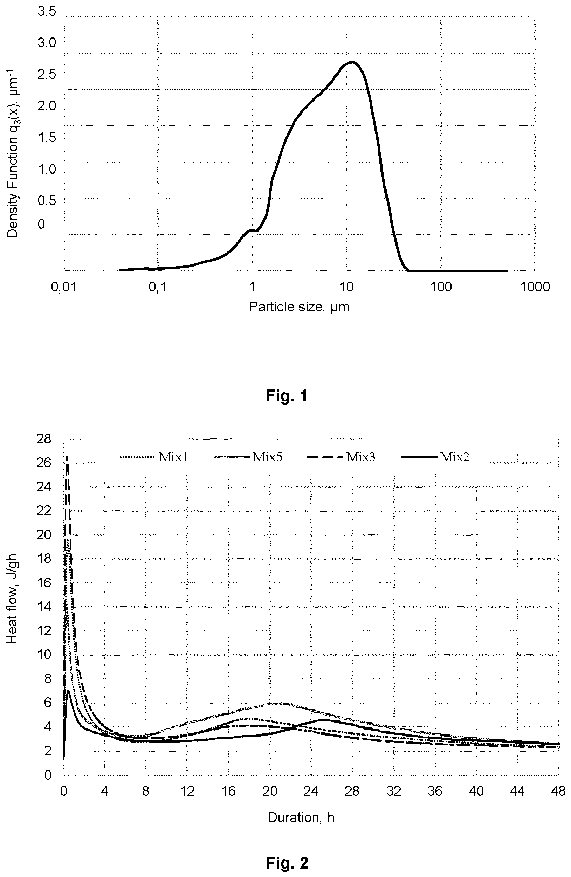

The chemical composition of the selected fraction is quite stable: the content of SiO₂ is 44.5-48.7%, the content of CaO is 12.1-14.8%, Al₂O₃ is 4.3-7.5% and the content of Na₂O is 3.5-4.2%. The average bulk-density of ground MSWI BA of all samples was determined to be 0.9 g/cm³, the particle density was 2.7 g/cm³, and pH - 9.4. The mean-particle-size of ground MSWI BA distribution is shown in **Figure 1****.** The particle size of ground MSWI BA is close to the particle size of cement.

**Figure 2** shows calorimetric curves of different mixtures, which illustrate that the addition of quicklime accelerates the binding but reduces the values of the maximum heat release rate in the third hydration stage and significantly increases it in the first hydration stage. The latest setting occurs in mixtures with CEM II A/LL 42.5 N cement when no quicklime additive is used. **Table 3** shows the total amount of heat released during the hydration of the binder.

**Table 3. The total amount of heat released, J/g**

| **Sample** | **The total amount of heat released, J/g** |
|---|---|
| Mix1 (with 5% of quicklime) | 228 |
| Mix2 (CEM II) | 212 |
| Mix3 (with 10% of quicklime) | 225 |
| Mix5 (CEM I) | 252 |

The data in the **Table 3** show that most heat is released during hydration in mixtures with CEM I (Mix5) and the least with CEM II (Mix2). CEM II cement contains ~ 17% limestone additive, which slows down the hydration processes, CEM I cement contains ~ 2% such additives.

The results for density, UPV, and compressive strength of binder paste samples after 7, 28, and 56 days of hardening are shown in **Table 4.**

**Table 4. Results of physical and mechanical properties of binder paste samples.**

| **Sample** | **Density, kg/m³** | | | **UPV, m/s** | | | **Compressive strength, MPa (Standard deviation)** | | |
|---|---|---|---|---|---|---|---|---|---|
| | **7 d.** | **28 d.** | **56 d.** | **7 d.** | **28 d.** | **56 d.** | | | |
| | | | | | | | **7 d.** | **28 d.** | **56 d.** |
| ***Mix1*** | *1794* | *1797* | *1807* | *2724* | *3197* | *3313* | *10,2(0.4)* | ***19,4(0.2)*** | ***25,5(2.1)*** |
| ***Mix2*** | *1780* | *1785* | *1800* | *2885* | *3285* | *3357* | *12,2(1.0)* | ***20,6(0.6)*** | ***26,3(2.3)*** |
| **Mix3** | 1712 | 1718 | 1721 | 2467 | 2976 | 2995 | 6,2(0.1) | 13,0(1.3) | 18,2(1.6) |
| **Mix4** | 1609 | 1624 | 1626 | 2889 | 3083 | 3084 | 8,9(0.1) | 11,8(1.3) | 16,4(0.3) |
| **Mix5** | 1824 | 1800 | 1810 | 2902 | 3220 | 3375 | 11,4(0.1) | 20,2(0.1) | 23,9(0.7) |

The best compressive strength results were obtained for the **Mix1** and **Mix2** samples. The test results for these compositions according to EN 196-1 with CEN standard sand are provided in **Table 5.** The expansion of these compositions, determined according to EN 196-3 standard, is less than 1mm and the onset of binding is longer than 100 minutes.

**Table 5. The test results for the binder compositions Mix1 and Mix2.**

| **Sample** | **Density, kg/m³** | | | **UPV, m/s** | | | **Compressive strength, MPa (Standard deviation)** | | |
|---|---|---|---|---|---|---|---|---|---|
| | **7 d.** | **28 d.** | **56 d.** | **7 d.** | **28 d.** | **56 d.** | | | |
| | | | | | | | **7 d.** | **28 d.** | **56 d.** |
| ***Mix1*** | *2201* | *2167* | *2200* | *3509* | *3870* | *4160* | *9.6(0.3)* | *20.1(0.3)* | *26.5(0.6)* |
| ***Mix2*** | *2164* | *2180* | *2163* | *3572* | *3762* | *4051* | *10.2(0.6)* | *17.3(0.2)* | *22.6(1.4)* |

Composition and proportions according to claim 1:
- MSWI BA 55-60%;
- Cement CEM II A / LL 42.5 N 35-40%;
- Quicklime CL90 4-6%.

The addition of lime in the binder accelerates the hydration of the mixture, reduces the bloating due to the free aluminum, and at the same time increases the density, the UPV and the compressive strength. By increasing the amount of quicklime in the mixture, the mixture becomes non-technological, the demand for water increases, and the temperature of the mixture rises.

Other composition and proportions (not according to the invention):
- MSWI BA 55-60%;
- Cement CEM II A / LL 42.5 N 40-45%.

Increasing the amount of MSWI BA in the mixtures will not give the required compressive strength for class E2 (EN 13282-1) or for class N3 (EN 13282-2, Mix1). Increasing the amount of cement will speed up the setting process and reduce the recycling efficiency of MSWI BA, and also, increasing the cost of the binder.

### LIST OF NON-PATENT CITATIONS

**1.** D.Hoornweg, P.Bhada-Tata, What a waste: a global review of solid waste management, January 2012.
**2.** Liu, Z., Liu, Z., Li, X., 2006. Status and prospect of the application of municipal solid waste incineration in China. Appl. Therm. Eng. 26 (11-12), 1193-1197.
**3.** Wu, B., Wang, D., Chai, X., Takahashi, F., Shimaoka, T., 2016. Characterization of chlorine and heavy metals for the potential recycling of bottom ash from municipal solid waste incinerators as cement additives. Front. Environ. Sci. Eng. 10 (8).
**4.** Brunner, P.H., Rechberger, H., 2015. Waste to energy - key element for sustainable waste management. Waste Manag 373-12.
**5.** Collivignarelli, M.C., Abbà, A., Sorlini, S., Bruggi, M., 2017. Evaluation of concrete production with solid residues obtained from fluidized-bed incineration of MSW-derived solid recovered fuel (SRF). J. Mater. Cycles Waste Manag. 19 (4), 1374-1383.
**6.** Cheng Y., Wang S., Li J., Huang X., Li C., Wu J. 2018. Engineering and mineralogical properties of stabilized expansive soil compositing lime and natural pozzolans. Construction and Building Materials 187 1031-1038.
**7.** Bozbeya I., Kelesoglu M.K., Demir B., Komut M., Comez S., Ozturk T., Mert A., Ocal K., Oztoprak S. 2018. Effects of soil pulverization level on resilient modulus and freeze and thaw resistance of a lime stabilized clay. Cold Regions Science and Technology 151, 323-334.
**8.** Sharma L.K., Sirdesai N.N., Sharma K.M., Singh T.N. 2018. Experimental study to examine the independent roles of lime and cement on the stabilization of a mountain soil: A comparative study. Applied Clay Science 152, 183-195.
**9.** Abdel-Salam A.F. 2018. Stabilization of peat soil using locally admixture. HBRC Journal 14(3), 294-299.
**10.** Li, X., Yu, Z., Ma, B., Wu, B., 2010. Effect of MSWI fly ash and incineration residues on cement performances. J. Wuhan Univ. Technol. Sci Ed. 25 (2), 312-315.
**11.** Li, X.G., Lv, Y., Ma, B.G., Chen, Q.B., Yin, X.B., Jian, S.W., 2012. Utilization of municipal solid waste incineration bottom ash in blended cement. J. Cleaner Prod 3296-100.

## Claims

1. A composition of a hydraulic road binder, comprising at least:
• a part of municipal solid waste incineration bottom ash (MSWI BA),
• cement,
**wherein** said binder composition comprises:
• MSWI Bottom Ash, in the total mass of the binder - 55-60%, by weight;
• cement CEM II A/LL 42.5 N - 35-40%, by weight;
• quicklime CL90 - 4-6%, by weight;

2. The composition according to claim 1, **wherein** the preferred proportion of the binder composition **(Mix1)** comprises components by the following proportions of ranges, by weight:
• MSWI BA 60%;
• Cement CEM II A / LL 42.5 N 35%;
• Quicklime CL90 5%.

3. A method of producing the binder composition according to Claims 1 to 2 **comprising** at least steps of:
**a)** MSWI BA is aged for at least 6 months, under natural outdoor conditions, and cleaned of metal inclusions;
**b)** The obtained bottom ash is dried at 105±3°C to stabilized weight;
**c)** The 4/16 MSWI BA fraction is separated by sieving;
**d)** The separated 4/16 fraction is ground in a ball-mill to the fineness, wherein residue on a 90µm sieve remains <15%;
**e)** The binder was prepared by mixing the dry components required for the composition.

4. The method according to claim 3, **wherein** the step **e)** of mixing is:
• either performed in an Eirich type mixer, for 4 minutes;
• or for larger amounts, is mixed in a forced mixer, for 10 minutes.

## Patentansprüche

1. Zusammensetzung eines hydraulischen Tragschichtbinders, umfassend zumindest:
• einen Teil von Rostasche aus der Verbrennung von Siedlungsabfällen (MSWI BA),
• Zement,
wobei die Binderzusammensetzung umfasst:
• MSWI-Rostasche zu 55 bis 60 Gew.-% bezogen auf die Gesamtmasse des Binders;
• Zement CEM II A/LL 42,5 N zu 35 bis 40 Gew.-%;
• Branntkalk CL90 zu 4 bis 6 Gew.-%;

2. Zusammensetzung nach Anspruch 1, wobei der bevorzugte Anteil der Binderzusammensetzung (**Mix1**) Komponenten in den folgenden Gewichtsanteilen umfasst:
• MSWI BA 60 %;
• Zement CEM II A/LL 42,5 N 35 %;
• Branntkalk CL90 5 %.

3. Verfahren zum Herstellen der Binderzusammensetzung nach den Ansprüchen 1 bis 2, umfassend zumindest die Schritte:
**a)** die MSWI BA wird mindestens 6 Monate lang unter natürlichen Außenbedingungen gelagert und von metallischen Einschlüssen gereinigt;
**b)** die erhaltene Rostasche wird bei 105 ± 3 °C bis zur Gewichtskonstanz getrocknet;
**c)** die 4/16-MSWI-BA-Fraktion wird durch Sieben abgetrennt;
**d)** die abgetrennte 4/16-Fraktion wird in einer Kugelmühle auf eine Feinheit vermahlen, bei der ein Rückstand auf einem 90-µm-Sieb weniger als 15 % beträgt;
**e)** der Binder wurde durch Mischen der für die Zusammensetzung erforderlichen trockenen Komponenten hergestellt.

4. Verfahren nach Anspruch 3, wobei Schritt **e)** des Mischens:
• entweder in einem Mischer des Typs Eirich für 4 Minuten durchgeführt wird;
• oder bei größeren Mengen in einem Zwangsmischer für 10 Minuten durchgeführt wird.

## Revendications

1. Composition de liant routier hydraulique, comprenant au moins :
• une fraction de mâchefers d'incinération d'ordures ménagères (MIOM),
• du ciment,
dans laquelle ladite composition de liant comprend :
• des MIOM, à hauteur de 55 à 60 % en poids par rapport à la masse totale du liant ;
• du ciment CEM II A/LL 42,5 N, à hauteur de 35 à 40 % en poids ;
• de la chaux vive CL90, à hauteur de 4 à 6 % en poids.

2. Composition selon la revendication 1, dans laquelle la formulation préférée de la composition de liant (Mix1) comprend des composants selon les proportions suivantes, en poids :
• MIOM : 60 % ;
• Ciment CEM II A/LL 42,5 N : 35 % ;
• Chaux vive CL90 : 5 %.

3. Procédé de production de la composition de liant selon la revendication 1 ou 2, comprenant au moins les étapes consistant à :
a) vieillir les MIOM pendant au moins 6 mois, dans des conditions extérieures naturelles, et en extraire les inclusions métalliques ;
b) sécher les mâchefers obtenus à 105 ± 3 °C jusqu'à l'obtention d'une masse constante ;
c) séparer la fraction 4/16 des MIOM par tamisage ;
d) broyer la fraction 4/16 séparée dans un broyeur à boulets jusqu'à la finesse souhaitée, de telle sorte qu'un refus sur un tamis de 90 µm demeure inférieur à 15 % ;
e) préparer le liant en mélangeant les composants secs requis pour la composition.

4. Procédé selon la revendication 3, dans lequel l'étape e) de mélange est exécutée :
• soit dans un mélangeur de type Eirich, pendant 4 minutes ;
• soit, pour des quantités plus importantes, dans un malaxeur à mélange forcé, pendant 10 minutes.
